# EUROPEAN PATENT APPLICATION

(11) **EP 4 583 426 A1**
(43) Date of publication of application: **09.07.2025**
(21) Application number: 23870017.3
(22) Date of filing: 14.08.2023
(51) Int. Cl.: H04B 10/079

(54) **FAULT ROOT CAUSE LOCATION METHOD AND APPARATUS FOR FRONTHAUL LINK**

(30) Priority: 28.09.2022 CN 202211192943
(71) Applicant: ZTE CORPORATION, Shenzhen, Guangdong 518057 (CN)
(72) Inventor: LI, Lulu, Shenzhen, Guangdong 518057 (CN); CHEN, Zuochao, Shenzhen, Guangdong 518057 (CN); LI, Zheng, Shenzhen, Guangdong 518057 (CN)
(74) Representative: Deambrogi, Edgardo
(86) International application number: PCT/CN2023/112951
(87) International publication number: WO 2024/066771

(57) **Abstract**

The present disclosure provides a fault root cause location method and apparatus for a fronthaul link. The method comprises: acquiring a plurality of groups of target data corresponding to a plurality of groups of links in a fronthaul link, wherein each group of links corresponds to one group of target data; determining the link state of each link in each group of links according to the plurality of groups of target data; and performing fault root cause location on an abnormal link in an abnormal link state.

## Description

### Cross-Reference to Related Application

The present disclosure is based on and claims priority to Chinese patent application CN202211192943.X filed on September 28, 2022 and entitled "Fault Root Cause Location Method and Apparatus for Fronthaul Link", the disclosure of which is incorporated herein by reference in its entirety.

### Technical Field

The present disclosure relates to the field of communications, and in particular to a fault root cause location method and apparatus for a fronthaul link.

### Background

After the advent of Fifth Generation (5G) wireless communication technologies, with the continuous evolution of wireless technology architecture, new changes have also been introduced in network formation technology. A Centralized Radio Access Network (C-RAN), characterized by its centralized processing, collaborative radio, and real-time cloud computing wireless access network architecture, has become the mainstream in subsequent 5G construction. While improving the bandwidth, flexibility, and low-cost network construction of the system, the complexity of operation and maintenance has also increased. Due to the introduction of wavelength-division multiplexing technology and color optical modules in fronthaul links of the C-RAN networking, the complexity of the fronthaul links leads to increased maintenance costs and introduces many faults that are difficult to locate and define.

Existing fault detection methods for the fronthaul links mostly involve adding wavelength tuning modules and detection modules to the optical links. Based on alarm information of a link, the wavelength tuning module is controlled to send an optical signal with a suspected fault wavelength into the link, and whether a fault exists is analyzed based on optical power received by the detection module. Such fault detection methods have disadvantages that wavelength tuning modules are required to be added to the fronthaul links for actively sending the optical signal with the suspected fault wavelength to detect faults, which not only increases the cost of test and measurement equipment but also increases the cost of maintaining the test and measurement equipment. Additionally, this fault detection method is only applicable to a Wavelength Division Multiplexing Passive Optical Network (WDM-PON), and has certain limitations.

For the problem of high maintenance cost and significant limitation of the fault detection method for the fronthaul link in the related art, there is no solution yet.

### Summary

Embodiments of the present disclosure provide a fault root cause location method and apparatus for a fronthaul link, which may at least solve the problem of high maintenance cost and significant limitation of the fault detection method for the fronthaul link in the related art.

According to an embodiment of the present disclosure, a fault root cause location method for a fronthaul link is provided. The fault root cause location method includes: acquiring multiple sets of target data corresponding to multiple sets of links in the fronthaul link, wherein each set of links in the multiple sets of links corresponds to one set of target data; determining a link status of each link in each set of links respectively according to the multiple sets of target data; and performing fault root cause location for an abnormal link whose link status is abnormal.

According to another embodiment of the present disclosure, a fault root cause location apparatus for a fronthaul link is provided. The fault root cause location apparatus for the fronthaul link includes: an acquisition module, configured to acquire multiple sets of target data corresponding to multiple sets of links in the fronthaul link, wherein each set of links in the multiple sets of links corresponds to one set of target data; a status determination module, configured to determine a link status of each link in each set of links respectively according to the multiple sets of target data; and a root cause location module, configured to perform fault root cause location for an abnormal link whose link status is abnormal.

According to still another embodiment of the present disclosure, a computer readable storage medium is further provided. The computer readable storage medium stores a computer program, and the computer program, when being run by a processor, executes the operations in any one of the foregoing method embodiments.

According to yet another embodiment of the present disclosure, an electronic device is also provided, including a memory and a processor, wherein the memory stores a computer program, and the processor is configured to run the computer program so as to execute the operations in any one of the method embodiments.

### Brief Description of the Drawings

Fig. 1 is a block diagram of the hardware structure of a fault root cause location method for a fronthaul link according to some embodiments of the present disclosure;
Fig. 2 is a flowchart of a fault root cause location method for a fronthaul link according to some embodiments of the present disclosure;
Fig. 3 is a structural block diagram of a fault root cause location system for a fronthaul link according to some other embodiments of the present disclosure;
Fig. 4 is an operational flowchart of a data collection module according to some embodiments of the present disclosure;
Fig. 5 is an operational flowchart of an intelligent analysis module according to some embodiments of the present disclosure;
Fig. 6 is an operational flowchart of a conclusion presentation module according to some embodiments of the present disclosure; and
Fig. 7 is a block diagram of a fault root cause location apparatus for a fronthaul link according to some embodiments of the present disclosure.

### Detailed Description of the Embodiments

Embodiments of the present disclosure will be described below in detail with reference to the accompanying drawings and in conjunction with embodiments.

It should be noted that, terms such as "first" and "second" in the description, claims, and accompanying drawings of the present disclosure are used to distinguish similar objects, but are not necessarily used to describe a specific sequence or order.

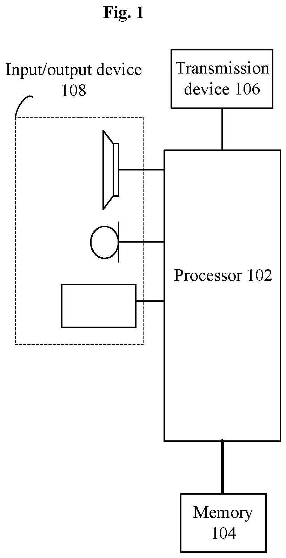

The method embodiments provided in the embodiments of the present disclosure may be executed in a mobile terminal, a computer terminal, a cloud server or a similar computing device. Taking the operation on a computer terminal as an example, Fig. 1 is a block diagram of the hardware structure of a fault root cause location method for a fronthaul link according to some embodiments of the present disclosure. As shown in Fig. 1, the hardware board may include one or more (only one is shown in Fig. 1) processors 102 (the one or more processors 102 may include, but are not limited to, a processing apparatus such as a microprocessor (e.g., a Micro Controller Unit (MCU)) or a programmable logic device) and a memory 104 configured to store data. The mobile terminal may further include a transmission device 106 for a communication function and an input/output device 108. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 104 may be used for storing a computer program, for example, a software program and module of application software, such as a computer program corresponding to the fault root cause location method for the fronthaul link in the embodiments of the present disclosure. The one or more processors 102, by running the computer program stored in the memory 104, execute various function applications and fault root cause location processing for the fronthaul link, thereby realizing the described method. The memory 104 may include a high-speed random access memory, and may also include a non-volatile memory, such as one or more magnetic storage devices, flash memory, or other non-volatile solid-state memory. In some instances, the memory 104 may further include a memory remotely located with respect to the one or more processors 102, which may be connected to the mobile terminal over a network. Examples of such networks include, but are not limited to, the Internet, intranets, local area networks, mobile communication networks, and combinations thereof.

The transmission device 106 is configured to receive or transmit data via a network. Specific embodiments of the described network may include a wireless network provided by a communication provider. In an embodiment, the transmission device 106 may include a Network Interface Controller (NIC) that may be coupled to other network devices via a base station to communicate with the Internet. In an embodiment, the transmission device 106 may be a Radio Frequency (RF) module for communicating wirelessly with the Internet.

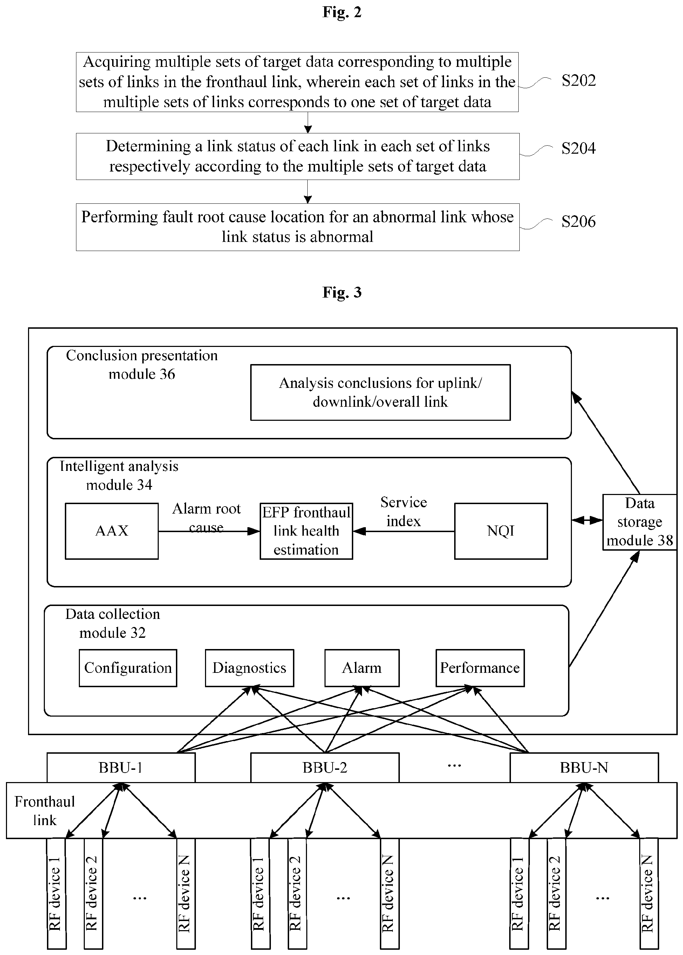

The present embodiment provides a fault root cause location method for a fronthaul link. Fig. 2 is a flowchart of a fault root cause location method for a fronthaul link according to some embodiments of the present disclosure. As shown in Fig. 2, the flow includes the following operations S202 to S206.

In operation S202, multiple sets of target data corresponding to multiple sets of links in the fronthaul link are acquired, wherein each set of links in the multiple sets of links corresponds to one set of target data.

In operation S204, a link status of each link in each set of links is respectively determined according to the multiple sets of target data.

In operation S206, fault root cause location is performed for an abnormal link whose link status is abnormal.

In this embodiment, before the operation S202, link data related to the fronthaul link needs to be collected in advance, and this operation includes: collecting, according to a first time period, link data of each link in the fronthaul link, wherein the link data includes at least one of: a mapping relationship between a link and an optical port, optical port diagnosis data, link performance data, and link alarm data; and storing the link data in a database according to a second time period, wherein the second time period is greater than the first time period.

In some exemplary implementations, link data may be collected by using the following methods.

The mapping relationship between the link and the optical port may be directly obtained from an interface of a configuration management module of a network element management system.

The optical port diagnosis data includes upper and lower level optical port diagnosis information of all links that is acquired from various network elements, including an optical fiber length, an optical port rate, an optical module temperature, a transmission power of a local optical module and a reception power of a peer optical module, etc..

The link performance data includes a packet error rate and a bit error rate, wherein a measurement task of the bit error rate and the packet error rate may be started in advance in a performance management module of the network element management system, and after the measurement task is sent to various network elements, the network elements periodically report collected data about the bit error rate and the packet error rate.

The link alarm data includes current alarms and history alarms that are directly acquired by means of an alarm management module of the network element management system; in order to reduce the amount of data, the collected alarms are all link-related alarms, such as an optical port/optical module alarm, a baseband device alarm, a radio frequency device alarm, and a link fault-type alarm.

In this embodiment, the first time period may be flexibly set according to the volume of the collected data, and is generally set to 15 minutes. In this embodiment, the second time period may be set to 24 hours, thereby implementing centralized reporting of link data collected in a plurality of batches in different time periods.

In this embodiment, operation S202 may specifically include the following operations S2021 to S2024.

In operation S2021, target link data is acquired from a database according to a third time period, wherein the target link data is a plurality of batches of link data collected at intervals of a first time period within a previous third time period.

In operation S2022, the target link data is preprocessed to obtain preprocessed target link data.

In operation S2023, a maximum number of links that the server is able to process at one time is determined according to a memory of a server and processing performance of the server.

In operation S2024, the preprocessed target link data is divided into the multiple sets of target data according to a total number of links and the maximum number of links.

In this embodiment, the third time period in operation S2021 may be set as 24 hours, the first time period may be set as 15 minutes, and the target link data includes link data of a total of 96 batches collected every 15 minutes in a historical 24-hour period.

In some exemplary implementations, the third time period may be adjusted according to an invocation period of an algorithm module, and the target link data is acquired before each invocation of the algorithm module.

In this embodiment, operation S2022 may specifically include: selecting latest original data within the previous third time period, removing abnormal or invalid data, and combining the configuration data and the diagnosis data.

In some exemplary implementations, in a case where the third time period is 24 hours, original data in the most recent 24 hours needs to be selected. The configuration data is equivalent to the mapping relationship between the link and the optical port, and diagnosis data corresponding to each link may be determined by combining the configuration data and the optical port diagnosis data.

In this embodiment, operation S2023 may specifically include: reasonably dividing the target link data into a plurality of batches according to link scale, server configuration, and algorithm performance, so as to ensure the algorithm running efficiency. For example, in a case where the algorithm service occupies the maximum resource of 1 core 2G memory of the server, and the link scale is 6500 links, the input data may be divided into 7 batches, each batch including 1000 links, so that subsequent algorithms are invoked in batches.

In this embodiment, operation S204 may specifically include the following operations S2041 to S2043.

In operation S2041, a predetermined risk threshold value of each link is acquired.

In operation S2042, a plurality of batches of predicted risk values of each link at intervals of the first time period in a next third time period are determined respectively according to the multiple sets of target data.

In operation S2043, the link status of each link is determined according to the predetermined risk threshold value and the plurality of batches of predicted risk values.

In this embodiment, before the operation S2041, it is further required to determine the risk threshold value, and this operation includes:
acquiring, at intervals of a fourth time period, target traffic performance data of each link within a fifth time period, wherein the target traffic performance data is a plurality of batches of traffic performance data collected at intervals of the first time period, and the traffic performance data includes at least one of a bit error rate, a packet error rate and a real-time service traffic index; and
determining the risk threshold value of each link according to the target traffic performance data, wherein the risk threshold value is updated at intervals of the fourth time period.

In this embodiment, the fourth time period may be 24 hours, the fifth time period may be 7 days, and the first time period may be 15 minutes. The risk threshold value needs to be determined to obtain the accumulated target traffic performance data of 7 days, which is usually the latest 7 days. The risk threshold value is updated every 24 hours.

In this embodiment, in operation S2042, the third time period may be 24 hours, the first time period may be 15 minutes, and each time the target data is input, the predicted risk value of each link in the set of links at intervals of 15 minutes with the next 24 hours may be obtained.

In this embodiment, both the predicted risk value and the risk threshold value are determined according to the bit error rate and the packet error rate of the link.

In this embodiment, the operation S2043 may specifically include the following operations:
respectively comparing the plurality of batches of predicted risk values of each link with the risk threshold value, so as to obtain a number of predicted risk times of the link within the next third time period, wherein the number of predicted risk times is the number of batches of which the predicted risk values are greater than the risk threshold value within the next third time period;
in a case where the number of predicted risk times is greater than or equal to a preset risk threshold, determining whether the link has link alarm data;
in a case where it is determined that the link has no link alarm data, determining that the link status of the link is that the link has a risk; and
in a case where it is determined that the link has link alarm data, determining that the link status of the link is that the link has a fault,
wherein the abnormal link whose link status is abnormal includes a link whose link status is that the link has a risk and a link whose link status is that the link has a fault.

In this embodiment, the above operation S2043 may further include the following operations:
acquiring, at intervals of a fourth time period, target traffic performance data of each link within a fifth time period, wherein the target traffic performance data is a plurality of batches of traffic performance data collected at intervals of the first time period, and the traffic performance data includes at least one of a bit error rate, a packet error rate and a real-time service traffic index;
in a case where the number of predicted risk times is less than the preset risk threshold, determining whether the target traffic performance data includes a preset batch of traffic performance data;
in a case where it is determined that the target traffic performance data does not include the preset batch of traffic performance data, determining that the link status of the link is undetermined due to insufficient data; and
in a case where it is determined that the target traffic performance data includes the preset batch of traffic performance data, determining that the link status of the link is that the link is normal.

In this embodiment, the target traffic performance data in operation S2043 is the same data as the target traffic performance data used for determining the risk threshold value.

In this embodiment, determining whether the target traffic performance data includes a preset batch of traffic performance data includes: determining whether the target traffic performance data includes traffic performance data of a link on a current day, and whether a number of days with missing traffic performance data exceeds a threshold value. For example, a link whose data on the current day is completely missing or whose data is missing for more than three days in seven days in history is considered as a link with insufficient data.

In this embodiment, the above operation S206 specifically includes the following operations S2061 to S2063.

In operation S2061, in a case where the link status is abnormal, a first fault location result of the abnormal link is determined according to optical port diagnosis data of the abnormal link, wherein the optical port diagnosis data includes at least one of: an optical fiber length, an optical port rate, an optical module temperature, a transmission power of a local optical module and a reception power of a peer optical module.

In operation S2062, in a case where the link status is that the link has a risk, the first fault location result is determined as a result of the fault root cause location for the abnormal link.

In operation S2063, in a case where the link status is that the link has a fault, a second fault location result determined according to the link alarm data is acquired from a pre-trained alarm model, the first fault location result and the second fault location result are combined, and the combination of the first fault location result and the second fault location result is determined as the result of the fault root cause location for the abnormal link, wherein the second fault location result includes at least one of: an optical port exception, an optical module exception, a baseband device exception, a radio frequency device exception, and a link exception.

In this embodiment, operation S2061 may specifically include: in a case where the optical fiber length is greater than an optical fiber length threshold, determining that the first fault location result is that the optical fiber length is abnormal; in a case where the optical port rate is greater than an optical port rate threshold, determining that the first fault location result is that the optical port rate is abnormal; in a case where the optical module temperature is greater than an optical module temperature threshold, determining that the first fault location result is that the optical module temperature is abnormal; in a case where the reception power is less than a reception power threshold, determining that the first fault location result is that the reception power is abnormal; and in a case where a difference between the transmission power of the local optical module and the reception power of the peer optical module is greater than an insertion loss threshold, determining that the first fault location result is that an insertion loss is abnormal.

In this embodiment, the pre-trained alarm model in operation S2063 is an Alarm Automation Expert (AAX model), and this alarm model automatically analyzes the alarm root cause and record the alarm generation root cause after the alarm is reported to the element management system.

In this embodiment, after operation S206, detailed division may be performed on the faulty links according to the alarm frequency and the alarm duration, which includes: determining the faulty link in which alarms occur for multiple times in a short time as intermittent disruption; determining the faulty link which has a long-time alarm and does not satisfy an intermittent disruption condition as continuous faulty; and keeping the link statuses of other faulty links unchanged.

In this embodiment, through the operations S202 to S206, the problem of high maintenance cost and significant limitation of the fault detection method for the fronthaul link in the related art may be solved, the fault detection costs and maintenance costs of the fronthaul link are reduced on the basis of not damaging the original link structure, the operation and maintenance efficiency is improved, and the limitation of the fronthaul link fault detection on the networking form in the related art is broken through.

According to another embodiment of the present disclosure, a fault root cause location system for a fronthaul link is also provided.

Fig. 3 is a structural block diagram of a fault root cause location system for a fronthaul link according to some other embodiments of the present disclosure. As shown in Fig. 3, the fault root cause location system for the fronthaul link mainly includes the following structures:
a data collection module 32, configured to continuously collect multi-dimensional original data required for fault root cause delimitation and location of a fronthaul link according to configuration of a collection task;
an intelligent analysis module 34, configured to providing an intelligent analysis algorithm for fault root cause delimitation and location of the fronthaul link, and perform risk prediction and fault root cause analysis on the fronthaul link based on the original data collected by the data collection module 32;
a conclusion presentation module 36, configured to present analysis conclusions and partial original data output by the intelligent analysis module 34 to a user;
a data storage module 38, configured to store the original data collected by the data collection module 32, and key intermediate data generated by the intelligent analysis module 34, and the analysis conclusions output by the intelligent analysis module 34.

In this embodiment, the multi-dimensional original data to be collected by the data collection module 32 includes at least one of: configuration data of links, diagnosis data of uplink and downlink optical ports on the link, alarm data related to uplink and downlink links, bit error and packet error KPI data of upper and lower optical ports, etc., wherein the configuration data of the links includes a mapping relationship between the link and the optical port, and the bit error and packet error KPI data includes a bit error rate and a packet error rate.

In this embodiment, the intelligent analysis module 34 may be composed of a partially automated expert system or an intelligent application component.

In this embodiment, the intelligent analysis module 34 may specifically include an Alarm Automation Expert (AAX), an Equipment Failure Prediction (EFP), and a Network Quality Insight (NQI).

In some exemplary implementations, the EFP mainly provides an intelligent algorithm for evaluating the health degree of a fronthaul link; the AAX is used for providing a root cause analysis conclusion of an alarm for the EFP; and the NQI is able to infer a suitable risk threshold value by combining the bit error and packet error KPI data and real-time service traffic indexes, so that the risk threshold value can be used by the EFP algorithm.

In this embodiment, the data storage module 38 may also provide interfaces for insertion, query, update, deletion, etc. to be used by external modules.

In another embodiment, the data collection module 32, the intelligent analysis module 34, the conclusion presentation module 36, and the data storage module 38 are part of the network element management system. In some exemplary implementations, the network element management system is a Unified Management Expert (UME) system, or the network element management system is a wireless network manager.

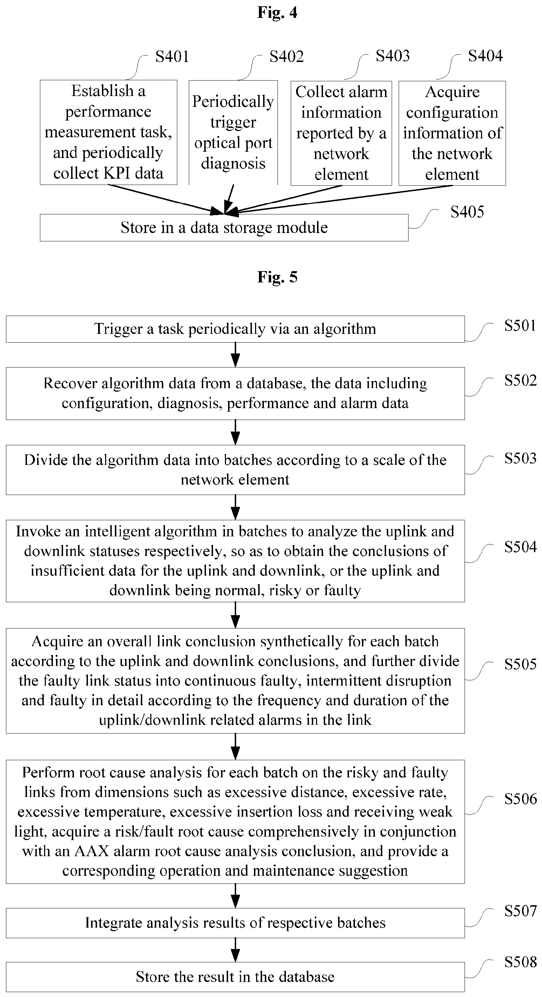

Fig. 4 is an operational flowchart of a data collection module according to some embodiments of the present disclosure. As shown in Fig. 4, the data collection module 32 is configured to perform the following operations S401 to S405 to complete the acquisition of the multi-dimensional original data.

In operation S401, a performance measurement task is established, and KPI data is periodically collected.

In operation S402, optical port diagnosis is periodically triggered.

In operation S403, alarm information reported by a network element is collected.

In operation S404, configuration information of the network element is acquired.

In operation S405, the collected multi-dimensional original data is stored in the data storage module 38.

In this embodiment, operations S401 to S404 are executed synchronously to implement link data collection in different dimensions.

In this embodiment, the Key Performance Indicator (KPI) data in operation S401 includes a bit error rate and a packet error rate.

In some exemplary implementations, a measurement task of the bit error rate and the packet error rate may be started in advance by a performance management module of a network element management system, and a collection interval may be flexibly set according to the volume of collected data, and is generally set to 15 minutes. After the measurement task is sent to the network element, each network element will periodically report the collected bit error and packet error data to the network element management system.

In this embodiment, in operation S402, the collection of the optical port diagnosis data is set as a regular task, and in some exemplary implementations, commands for optical port diagnosis in batches may be executed before the algorithm is invoked according to an algorithm invocation period.

Further, the optical port diagnosis data collected in operation S402 includes an optical fiber length, an optical port rate, an optical module temperature, a reception power of a peer optical module, a transmission power of a local optical module, and the like.

In this embodiment, operation S403 specifically includes: obtaining a current alarm and a history alarm from an alarm management module of the network element management system. In order to reduce the amount of data, all collected alarms are link-related alarms, such as an optical port/optical module alarm, a baseband device alarm, a radio frequency device alarm, and a link fault-type alarm.

In this embodiment, the configuration information in operation S404 may be directly acquired through a configuration management module interface of the network element management system, wherein the configuration information may specifically be a mapping relationship between a link and network ports at two ends of the link.

Fig. 5 is an operational flowchart of an intelligent analysis module according to some embodiments of the present disclosure. As shown in Fig. 5, the intelligent analysis module 34 is configured to locate a fault root cause for a fronthaul link by the following operations S501 to S508.

In operation S501, a task is triggered periodically via an algorithm.

In operation S502, algorithm data is recovered from a database, the data including configuration, diagnosis, performance and alarm data.

In operation S503, the algorithm data is divided into batches according to a scale of the network element.

In operation S504, an intelligent algorithm is invoked in batches to analyze the uplink and downlink statuses respectively, so as to obtain the conclusions of insufficient data for the uplink and downlink, or the uplink and downlink being normal, risky or faulty.

In operation S505, an overall link conclusion is acquired synthetically for each batch according to the uplink and downlink conclusions, and the faulty link status is further divided into continuous faulty, intermittent disruption and faulty in detail according to the frequency and duration of the uplink/downlink related alarms in the link.

In operation S506, root cause analysis is performed for each batch on the risky and faulty links from dimensions such as excessive distance, excessive rate, excessive temperature, excessive insertion loss and receiving weak light, a risk/fault root cause is acquired comprehensively in conjunction with an AAX alarm root cause analysis conclusion, and a corresponding operation and maintenance suggestion is provided.

In operation S507, analysis results of respective batches are integrated.

In operation S508, the result is stored in the database.

In this embodiment, the algorithm in operation S501 is a method for evaluating the health degree of a fronthaul link. The method for evaluating the health degree of the fronthaul link specifically includes two parts: risk prediction and fault detection. The task in operation S501 may be set to be periodically executed every day.

In this embodiment, operation S502 specifically further includes: performing data cleaning on original data acquired from the database, including: selecting original data in the most recent 24 hours, removing abnormal or invalid data, and combining the configuration data and the diagnosis data.

In some exemplary implementations, the configuration data includes a configuration relationship between the link and the optical port; the diagnosis data is optical port diagnosis data; and mapping the optical port diagnosis data to a corresponding link can be realized by combining the configuration data and the diagnosis data.

In this embodiment, operation S503 may specifically include: reasonably dividing the restored original data into a plurality of batches per network elements according to link scale, server configuration, and algorithm performance.

In some exemplary implementations, in a case where the algorithm service occupies the maximum resource of 1 core 2G memory of the server, and the link scale is 6500 links, the input data may be divided into 7 batches, each batch including 1000 links, so that subsequent algorithms are invoked in batches.

In this embodiment, by performing operation S503, algorithm running efficiency may be ensured in a case where original data has a large variety and a large amount of data.

In this embodiment, operation S504 further needs to obtain a risk threshold value from a Network Quality Insight (NQI) module.

In some exemplary implementations, before operation S504, the bit error and packet error KPI data and the real-time service traffic index may be input into the NQI, and the NQI obtains a suitable bit error and packet error threshold value as the risk threshold value of the link according to a relationship between the cumulative bit error and packet error in the uplink and downlink links in N (N is suggested to be 7) days and the service traffic degradation index, wherein the risk threshold value is updated every day.

In this embodiment, operation S504 may specifically include: taking the above risk threshold value and the batches of data divided in operation S503 as input of the EFP sub-module to obtain uplink and downlink faulty conclusion and a corresponding root cause delimitation and location result.

In this embodiment, operation S504 may specifically include the following operations S5041 and S5042.

In operation S5041, a bit error and packet error KPI index in the future is predicted according to historical data to obtain a predicted risk value.

In operation S5042, the predicted risk value is compared with the described risk threshold value, and a link status is determined based on the comparison.

In this embodiment, operation S5041 may specifically include: an Equipment Failure Prediction (EFP) module uses a time sequence prediction algorithm to predict a future trend of the uplink and downlink bit error and packet error KPI index of historical N days.

In some exemplary implementations, a plurality of batches of predicted risk values may be obtained according to a prediction period and a data collection period. For example, in a case where the data collection period is 15 minutes and the risk prediction period is 24 hours, by inputting a bit error and packet error KPI index collected in the previous 7 days, the predicted risk value in the next 24 hours can be predicted, wherein the predicted risk value includes the prediction results of a total of 96 batches, which are divided at intervals of 15 minutes, on the link in the next 24 hours.

In this embodiment, operation S5042 may specifically include respectively comparing the plurality of batches of predicted risk values obtained in the operation S5041 with the risk threshold value, determining the number of batches with the predicted risk value being greater than the risk threshold value within a next risk prediction period, and determining that the link is at risk when the number of batches is greater than a preset risk threshold. In some exemplary implementations, the risk prediction period is 1 day, and the preset risk threshold is 10 batches, which may be set according to actual situations.

In this embodiment, operation S5042 may further specifically include: for a link that is at risk, if a link-related alarm exists at the same time, the link conclusion is upgraded to faulty.

In this embodiment, operation S5042 may further specifically include: when the KPI data of the link on the current day are completely missing or the KPI data of the link are missing for more than X days in historical N days, determining that the conclusion for the link is that the status is undetermined due to insufficient data, and determining other links not complying with the above conclusion as normal links. In some exemplary implementations, N may be 7 days, and X may be 3 days.

In this embodiment, operation S505 may specifically include performing detailed status classification according to a frequency and duration of the link alarm in the 24 hours. For example, the faulty link in which alarms occur for multiple times in a short time is determined as intermittent disruption; the faulty link which has a long-time alarm and does not satisfy an intermittent disruption condition is determined as continuous faulty; and the link statuses of other faulty links are kept unchanged.

Further, during the execution of the algorithm, the statuses of the uplink and downlink at a granularity of every 15 minutes are also stored.

In this embodiment, operation S506 may specifically include: for a link whose link status is risky or faulty, performing risk/fault root cause analysis in five dimensions (excessive temperature, excessive distance, excessive rate, excessive insertion loss, and receiving weak light) according to detailed data of upper and lower optical modules, for example, optical port diagnosis data.

In some exemplary implementations, when the length of the optical fiber is greater than the threshold of the length of the optical fiber, it is determined that the root cause of the risk/fault is excessive distance of the optical fiber; when an optical port rate is greater than an optical port rate threshold, it is determined that the root cause of the risk/fault is excessive rate of the optical port; when the optical module temperature is greater than a temperature threshold value of the optical module, it is determined that the root cause of the risk/fault is excessive temperature of the optical module; when the reception power is less than a reception power threshold, it is determined that the root cause of the risk/fault is receiving weak light; when the link insertion loss is greater than an insertion loss threshold, it is determined that the root cause of the risk/fault is excessive insertion loss, wherein the link insertion loss is a difference value between the transmission power of the local optical module and the reception power of the peer optical module.

Further, when the link insertion loss is calculated, a product of an optical fiber transmission loss factor and an optical fiber length may further be subtracted from the difference.

In this embodiment, operation S506 may further specifically include: for a link whose link status is faulty, acquiring an alarm root cause of the link alarm in 24 hours from the AAX module, obtaining a final fault root cause taking into consideration the alarm root cause acquired from the AAX module and the fault root cause, and providing a corresponding operation and maintenance suggestion.

In some exemplary implementations, after the alarm data is reported to the element management system, the AAX module automatically analyzes the alarm root cause and records the root cause of the alarm.

In this embodiment, operation S507 may specifically include: integrating the risk/fault root causes in the five dimensions in operation S506 and the algorithm data and the prediction result of each batch in operation S504.

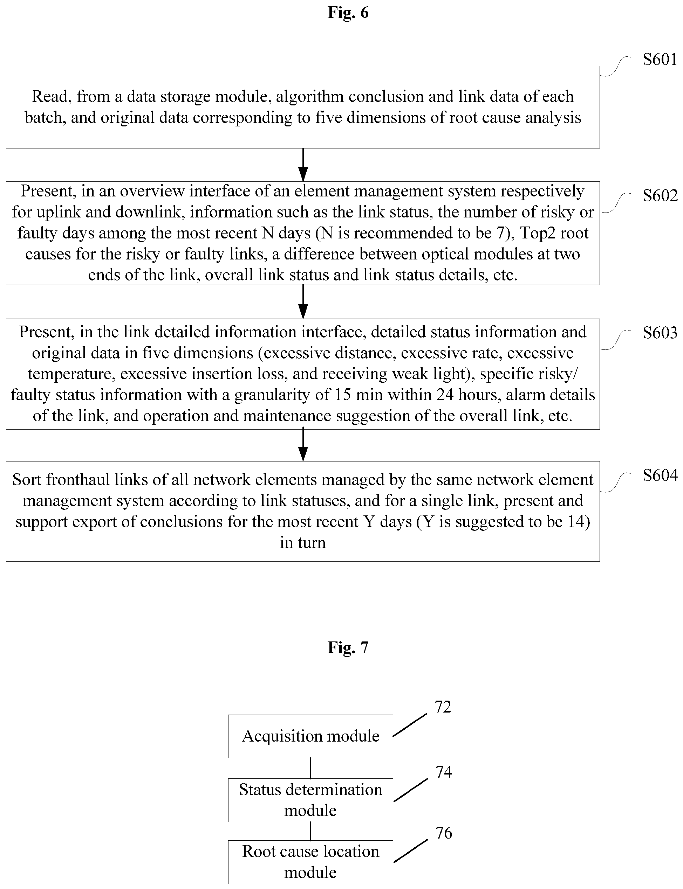

Fig. 6 is an operational flowchart of a conclusion presentation module according to some embodiments of the present disclosure. As shown in Fig. 6, the conclusion presentation module 36 may be specifically configured to perform the following operations S601 to S604.

In operation S601, algorithm conclusion and link data of each batch obtained in operation S507, and original data corresponding to five dimensions of root cause analysis are read from the data storage module 38.

In operation S602, information such as the link status, the number of risky or faulty days among the most recent N days (N is recommended to be 7), Top2 root causes for the risky or faulty links, a difference between optical modules at two ends of the link, overall link status and link status details, etc. is presented in an overview interface of the element management system respectively for uplink and downlink.

In operation S603, detailed status information and original data in five dimensions (excessive distance, excessive rate, excessive temperature, excessive insertion loss, and receiving weak light), specific risky/faulty status information with a granularity of 15 min within 24 hours, alarm details of the link, and operation and maintenance suggestion of the overall link, etc. is presented in the link detailed information interface.

In operation S604, fronthaul links of all network elements managed by the same network element management system are sorted according to link statuses, and for a single link, conclusions for the most recent Y days (Y is suggested to be 14) are presented in turn, and these conclusions are supported to be exported.

In this embodiment, through operations S601 to S604, the multi-dimensional root cause of the fronthaul link can be displayed, thereby improving the operation and maintenance efficiency of the staff on the faulty link.

According to another aspect of the embodiments of the present disclosure, a fault root cause location apparatus for a fronthaul link is also provided. Fig. 7 is a block diagram of a fault root cause location apparatus for a fronthaul link according to some embodiments of the present disclosure. As shown in Fig. 7, the fault root cause location apparatus for the fronthaul link includes:
an acquisition module 72, configured to acquire multiple sets of target data corresponding to multiple sets of links in the fronthaul link, wherein each set of links in the multiple sets of links corresponds to one set of target data;
a status determination module 74, configured to determine a link status of each link in each set of links respectively according to the multiple sets of target data; and
a root cause location module 76, configured to perform fault root cause location for an abnormal link whose link status is abnormal.

In this embodiment, the apparatus further includes a collection module, configured to collect, according to a first time period, link data of each link in the fronthaul link, wherein the link data includes at least one of: a mapping relationship between a link and an optical port, optical port diagnosis data, link performance data, and link alarm data; and store the link data in a database according to a second time period, wherein the second time period is greater than the first time period.

In this embodiment, the acquisition module 72 includes:
a first acquisition unit, configured to acquire target link data from a database according to a third time period, wherein the target link data is a plurality of batches of link data collected at intervals of a first time period within a previous third time period;
a preprocessing unit, configured to preprocess the target link data to obtain preprocessed target link data;
a first determination unit, configured to determine, according to a memory of a server and processing performance of the server, a maximum number of links that the server is able to process at one time; and
a dividing unit, configured to divide the preprocessed target link data into the multiple sets of target data according to a total number of links and the maximum number of links.

In this embodiment, the status determination module 74 includes:
a second acquisition unit, configured to acquire a predetermined risk threshold value of each link;
a second determination unit, configured to determine a plurality of batches of predicted risk values of each link at intervals of the first time period in a next third time period respectively according to the multiple sets of target data; and
a third determination unit, configured to determine the link status of each link according to the predetermined risk threshold value and the plurality of batches of predicted risk values.

In the present embodiment, the acquisition module is further configured to acquire, at intervals of a fourth time period, target traffic performance data of each link within a fifth time period, wherein the target traffic performance data is a plurality of batches of traffic performance data collected at intervals of the first time period, and the traffic performance data includes at least one of a bit error rate, a packet error rate and a real-time service traffic index.

In this embodiment, the status determination module 74 further includes:
a fourth determination unit, configured to determine the risk threshold value of each link according to the target traffic performance data, wherein the risk threshold value is updated at intervals of the fourth time period.

In this embodiment, the third determination unit further includes:
a comparison unit, configured to respectively compare the plurality of batches of predicted risk values of each link with the risk threshold value, so as to obtain a number of predicted risk times of the link within the next third time period, wherein the number of predicted risk times is the number of batches of which the predicted risk values are greater than the risk threshold value within the next third time period;
a first judging unit, configured to determine, in a case where the number of predicted risk times is greater than or equal to a preset risk threshold, whether the link has link alarm data; in a case where it is determined that the link has no link alarm data, determining that the link status of the link is that the link has a risk; and in a case where it is determined that the link has link alarm data, determine that the link status of the link is that the link has a fault; wherein the abnormal link whose link status is abnormal includes a link whose link status is that the link has a risk and a link whose link status is that the link has a fault.

In this embodiment, the third determination unit further includes:
a second determination unit, configured to determine, in a case where the number of predicted risk times is less than the preset risk threshold, whether the target traffic performance data includes a preset batch of traffic performance data; in a case where it is determined that the target traffic performance data does not include the preset batch of traffic performance data, determine that the link status of the link is undetermined due to insufficient data; and in a case where it is determined that the target traffic performance data includes the preset batch of traffic performance data, determine that the link status of the link is that the link is normal.

In this embodiment, the root cause location module 76 includes:
a root cause determination unit, configured to, in a case where the link status is abnormal, determine a first fault location result of the abnormal link according to optical port diagnosis data of the abnormal link, wherein the optical port diagnosis data includes at least one of: an optical fiber length, an optical port rate, an optical module temperature, a transmission power of a local optical module and a reception power of a peer optical module;
a risk location unit, configured to determine, in a case where the link status is that the link has a risk, the first fault location result as a result of the fault root cause location for the abnormal link; and
a fault location unit, configured to, in a case where the link status is that the link has a fault, acquire a second fault location result determined according to the link alarm data from a pre-trained alarm model, combine the first fault location result and the second fault location result, and determine the combination of the first fault location result and the second fault location result as the result of the fault root cause location for the abnormal link, wherein the second fault location result includes at least one of: an optical port exception, an optical module exception, a baseband device exception, a radio frequency device exception, and a link exception.

In this embodiment, the root cause determination unit is further configured to, in a case where the optical fiber length is greater than an optical fiber length threshold, determine that the first fault location result is that the optical fiber length is abnormal; in a case where the optical port rate is greater than an optical port rate threshold, determine that the first fault location result is that the optical port rate is abnormal; in a case where the optical module temperature is greater than an optical module temperature threshold, determine that the first fault location result is that the optical module temperature is abnormal; in a case where the reception power is less than a reception power threshold, determine that the first fault location result is that the reception power is abnormal; and in a case where a difference between the transmission power of the local optical module and the reception power of the peer optical module is greater than an insertion loss threshold, determine that the first fault location result is that an insertion loss is abnormal.

Embodiments of the present disclosure further provide a computer readable storage medium. The computer readable storage medium stores a computer program. When being run by a processor, the computer program executes operations in any one of the foregoing method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

Embodiments of the present disclosure further provide an electronic apparatus, including a memory and a processor. The memory stores a computer program. The processor is configured to run the computer program to execute operations in any one of the method embodiments.

In an exemplary embodiment, the electronic apparatus may further include a transmission device and an input/output device, wherein the transmission device is connected to the processor, and the input/output device is connected to the processor.

For exemplary embodiments in this embodiment, reference may be made to the embodiments described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

## Claims

1. A fault root cause location method for a fronthaul link, the fault root cause location method comprising:
acquiring multiple sets of target data corresponding to multiple sets of links in the fronthaul link, wherein each set of links in the multiple sets of links corresponds to one set of target data;
determining a link status of each link in each set of links respectively according to the multiple sets of target data; and
performing fault root cause location for an abnormal link whose link status is abnormal.

2. The fault root cause location method according to claim 1, wherein before acquiring the multiple sets of target data corresponding to the multiple sets of links in the fronthaul link, the fault root cause location method further comprises:
collecting, according to a first time period, link data of each link in the fronthaul link, wherein the link data comprises at least one of: a mapping relationship between a link and an optical port, optical port diagnosis data, link performance data, and link alarm data; and
storing the link data in a database according to a second time period, wherein the second time period is greater than the first time period.

3. The fault root cause location method according to claim 1, wherein acquiring the multiple sets of target data corresponding to the multiple sets of links in the fronthaul link comprises:
acquiring target link data from a database according to a third time period, wherein the target link data is a plurality of batches of link data collected at intervals of a first time period within a previous third time period;
preprocessing the target link data to obtain preprocessed target link data;
determining, according to a memory of a server and processing performance of the server, a maximum number of links that the server is able to process at one time; and
dividing the preprocessed target link data into the multiple sets of target data according to a total number of links and the maximum number of links.

4. The fault root cause location method according to claim 3, wherein determining the link status of each link in each set of links respectively according to the multiple sets of target data comprises:
acquiring a predetermined risk threshold value of each link;
determining a plurality of batches of predicted risk values of each link at intervals of the first time period in a next third time period respectively according to the multiple sets of target data; and
determining the link status of each link according to the predetermined risk threshold value and the plurality of batches of predicted risk values.

5. The fault root cause location method according to claim 4, wherein before acquiring the predetermined risk threshold value of each link, the fault root cause location method further comprises:
acquiring, at intervals of a fourth time period, target traffic performance data of each link within a fifth time period, wherein the target traffic performance data is a plurality of batches of traffic performance data collected at intervals of the first time period, and the traffic performance data comprises at least one of a bit error rate, a packet error rate and a real-time service traffic index; and
determining the risk threshold value of each link according to the target traffic performance data, wherein the risk threshold value is updated at intervals of the fourth time period.

6. The fault root cause location method according to claim 4, wherein determining the link status of each link according to the predetermined risk threshold value and the plurality of batches of predicted risk values comprises:
respectively comparing the plurality of batches of predicted risk values of each link with the risk threshold value, so as to obtain a number of predicted risk times of the link within the next third time period, wherein the number of predicted risk times is the number of batches of which the predicted risk values are greater than the risk threshold value within the next third time period; and
determining the link status according to the number of predicted risk times.

7. The fault root cause location method according to claim 6, wherein the abnormal link whose link status is abnormal comprises a link whose link status is that the link has a risk and a link whose link status is that the link has a fault, and determining the link status according to the number of predicted risk times comprises:
in a case where the number of predicted risk times is greater than or equal to a preset risk threshold, determining whether the link has link alarm data;
in a case where it is determined that the link has no link alarm data, determining that the link status of the link is that the link has a risk; and
in a case where it is determined that the link has link alarm data, determining that the link status of the link is that the link has a fault;
wherein the abnormal link whose link status is abnormal comprises a link whose link status is that the link has a risk and a link whose link status is that the link has a fault.

8. The fault root cause location method according to claim 7, further comprising:
acquiring, at intervals of a fourth time period, target traffic performance data of each link within a fifth time period, wherein the target traffic performance data is a plurality of batches of traffic performance data collected at intervals of the first time period, and the traffic performance data comprises at least one of a bit error rate, a packet error rate and a real-time service traffic index;
in a case where the number of predicted risk times is less than the preset risk threshold, determining whether the target traffic performance data comprises a preset batch of traffic performance data;
in a case where it is determined that the target traffic performance data does not comprise the preset batch of traffic performance data, determining that the link status of the link is undetermined due to insufficient data; and
in a case where it is determined that the target traffic performance data comprises the preset batch of traffic performance data, determining that the link status of the link is that the link is normal.

9. The fault root cause location method according to claim 6, wherein performing fault root cause location for the abnormal link whose link status is abnormal comprises:
in a case where the link status is abnormal, determining a first fault location result of the abnormal link according to optical port diagnosis data of the abnormal link, wherein the optical port diagnosis data comprises at least one of: an optical fiber length, an optical port rate, an optical module temperature, a transmission power of a local optical module and a reception power of a peer optical module;
in a case where the link status is that the link has a risk, determining the first fault location result as a result of the fault root cause location for the abnormal link; and
in a case where the link status is that the link has a fault, acquiring a second fault location result determined according to the link alarm data from a pre-trained alarm model, combining the first fault location result and the second fault location result, and determining the combination of the first fault location result and the second fault location result as the result of the fault root cause location for the abnormal link, wherein the second fault location result comprises at least one of: an optical port exception, an optical module exception, a baseband device exception, a radio frequency device exception, and a link exception.

10. The fault root cause location method according to claim 9, wherein determining the first fault location result of the abnormal link according to the optical port diagnosis data of the abnormal link comprises:
in a case where the optical fiber length is greater than an optical fiber length threshold, determining that the first fault location result is that the optical fiber length is abnormal;
in a case where the optical port rate is greater than an optical port rate threshold, determining that the first fault location result is that the optical port rate is abnormal;
in a case where the optical module temperature is greater than an optical module temperature threshold, determining that the first fault location result is that the optical module temperature is abnormal;
in a case where the reception power is less than a reception power threshold, determining that the first fault location result is that the reception power is abnormal; and
in a case where a difference between the transmission power of the local optical module and the reception power of the peer optical module is greater than an insertion loss threshold, determining that the first fault location result is that an insertion loss is abnormal.

11. A fault root cause location apparatus for a fronthaul link, the fault root cause location apparatus for the fronthaul link comprising:
an acquisition module, configured to acquire multiple sets of target data corresponding to multiple sets of links in the fronthaul link, wherein each set of links in the multiple sets of links corresponds to one set of target data;
a status determination module, configured to determine a link status of each link in each set of links respectively according to the multiple sets of target data; and
a root cause location module, configured to perform fault root cause location for an abnormal link whose link status is abnormal.

12. A computer readable storage medium, wherein the computer readable storage medium stores a computer program, and the computer program, when being run by a processor, executes the fault root cause location method according to any one of claims 1 to 10.

13. An electronic device, comprising a memory and a processor, wherein the memory stores a computer program, and the processor is configured to run the computer program so as to execute the fault root cause location method according to any one of claims 1 to 10.
